# EUROPÄISCHE PATENTANMELDUNG

(11) **EP 4 640 350 A1**
(43) Veröffentlichungstag der Anmeldung: **29.10.2025**
(21) Anmeldenummer: 25171812.8
(22) Anmeldetag: 22.04.2025
(51) Int. Cl.: B23D 45/16, B24B 55/05, B25F 5/02

(54) **ARBEITSGERÄT**

(30) Priorität: 23.04.2024 DE 102024111426; 23.04.2024 DE 102024111428
(71) Anmelder: Andreas Stihl AG & Co. KG, 71336 Waiblingen (DE)
(72) Erfinder: Schindler, Patrick, 73235 Weilheim an der Teck (DE); Ehrler, Denis, 73249 Wernau (DE); Härtel, Alexander, 71336 Waiblingen (DE)
(74) Vertreter: Stock, Johannes

(57) **Zusammenfassung**

Die Erfindung betrifft ein Arbeitsgerät umfassend, ein Gehäuse (2), eine vom Gehäuse (2) separat ausgebildete Motortrageinheit (10), wobei das Gehäuse (2) an der Motortrageinheit (10) fixiert ist, wobei ein Antriebsmotor (3) als Elektromotor zum Antrieb eines Werkzeuges (5) ausgebildet ist und an der Motortragtrageinheit (10) befestigt ist, ein von der Motortrageinheit (10) separat ausgebildetes Aufnahmegehäuse (20) zur Aufnahme mindestens eines Akkupacks (7) zur Versorgung des Antriebsmotors (3) mit elektrischer Energie, wobei das Aufnahmegehäuse (20) an dem Gehäuse (2) fixiert ist, und wobei das Aufnahmegehäuse (20) und die Motortrageinheit (10) derart ausgebildet und zueinander angeordnet sind, dass das Aufnahmegehäuse (20) relativ zur Motortrageinheit (10) bewegbar ist, um bei einer Stoßbelastung auf das Arbeitsgerät (1) eine unmittelbare Übertragung von von dem Aufnahmegehäuse (20) ausgehenden Trägheitskräften auf die Motortrageinheit (10) zu reduzieren, insbesondere zu vermeiden.

## Beschreibung

Die Erfindung betrifft ein Arbeitsgerät gemäß den Merkmalen des Oberbegriffs des Anspruchs 1.

Es sind handgeführte Arbeitsgeräte, insbesondere Trennschleifer, bekannt, die ein Gehäuse, einen im Gehäuse angeordneten Elektromotor und eine Motortrageinheit umfassen. Der Elektromotor sowie das Gehäuse sind an der Motortrageinheit gehalten. Über den Elektromotor wird ein an das Arbeitsgerät montierbares Werkzeug angetrieben. Als elektrische Energiequelle für den Elektromotor dient ein Akkupack, der am Gehäuse befestigt ist.

Nachteilig an derartigen Arbeitsgeräten ist, dass eine Stoßbelastung zur Beschädigung der Motortrageinheit führen kann. Eine solche Stoßbelastung kann beispielsweise durch das Fallenlassen des Arbeitsgerätes auf den Boden verursacht werden. Die Stoßbelastung kann wiederum eine Verformung der Motortrageinheit bewirken. Ist die Motortrageinheit verformt beziehungsweise beschädigt, kann zumindest die Effizienz, gegebenenfalls die Funktion des Elektromotors in Gänze, beispielsweise durch eine fehlende Rundlaufgenauigkeit des Rotors, beeinträchtigt werden.

Es ist daher Aufgabe der Erfindung, ein Arbeitsgerät anzugeben, dass eine erhöhte Widerstandsfähigkeit gegenüber äußeren Belastungen, insbesondere Stoßbelastungen, aufweist.

Diese Aufgabe wird durch ein Arbeitsgerät mit den Merkmalen nach Anspruch 1 gelöst.

Das erfindungsgemäße Arbeitsgerät umfasst, ein Gehäuse, eine vom Gehäuse separat ausgebildete Motortrageinheit, wobei das Gehäuse an der Motortrageinheit fixiert ist, einen im Gehäuse angeordneten Antriebsmotor, wobei der Antriebsmotor als Elektromotor zum Antrieb eines Werkzeuges ausgebildet ist und an der Motortragtrageinheit befestigt ist, ein von der Motortrageinheit separat ausgebildetes Aufnahmegehäuse zur Aufnahme mindestens eines Akkupacks zur Versorgung des Antriebsmotors mit elektrischer Energie, wobei das Aufnahmegehäuse an dem Gehäuse fixiert ist, und wobei das Aufnahmegehäuse und die Motortrageinheit derart ausgebildet und zueinander angeordnet sind, dass das Aufnahmegehäuse relativ zur Motortrageinheit bewegbar ist, um bei einer Stoßbelastung auf das Arbeitsgerät eine unmittelbare Übertragung von von dem Aufnahmegehäuse ausgehenden Trägheitskräften auf die Motortrageinheit zu reduzieren, insbesondere zu vermeiden.

Im Betrieb des Arbeitsgerätes ist in dem Aufnahmegehäuse mindestens ein Akkupack aufgenommen. Der Akkupack weist im Vergleich zu anderen Bauteilen eine besonders hohe Masse auf, demnach von dem Aufnahmegehäuse gemeinsam mit dem Akkupack im Falle einer Stoßbelastung, beispielsweis wenn das Arbeitsgerät auf einen Boden fällt, eine hohe Trägheitskraft ausgeht. Damit diese Trägheitskraft nicht unmittelbar auf die Motortrageinheit wirkt und diese beschädigt, ist das Aufnahmegehäuse für die Aufnahme des Akkupacks von der Motortrageinheit entkoppelt, also bewegbar gegenüber der Motortrageinheit ausgebildet. Demnach ist das Aufnahmegehäuse zumindest nicht unmittelbar an der Motortrageinheit, sondern am Gehäuse befestigt. Das Gehäuse, das wiederum an der Motortrageinheit fixiert ist, dämpft die von dem Aufnahmegehäuse und dem mindestens einen Akkupack ausgehenden Trägheitskräfte, noch bevor diese auf die Motortrageinheit übertragen werden können. Der Anteil der Trägheitskräfte, der auf die Motortrageinheit wirkt, ist dann deutlich geringer, als die initial von dem Aufnahmeschacht und dem mindestens einen Akkupack ausgehenden Trägheitskräften. Die Motortrageinheit ist zur präzisen Führung des Arbeitsgerätes vorzugsweise möglichst steif ausgebildet und weist daher nur geringe Dämpfungsfähigkeiten auf. Das Gehäuse dient als Dämpfungsmittel zwischen Motortrageinheit und Aufnahmeschacht. Somit können Beschädigungen an der Motortrageinheit vermieden werden.

Es ist vorteilhaft vorgesehen, dass die Motortrageinheit und das Aufnahmegehäuse lediglich über das Gehäuse miteinander verbunden sind. Somit dient das Gehäuse als alleiniges Dämpfungsmittel zwischen der Motortrageinheit und dem Aufnahmegehäuse. Die Motortrageinheit und das Aufnahmegehäuse sind insbesondere beabstandet zueinander angeordnet. Die Beabstandung von Aufnahmegehäuse und Motortrageinheit bezieht sich selbstverständlich auf einen Ruhezustand des Arbeitsgerätes, in welchem dieses nicht bewegt wird und keiner Belastung, insbesondere Stoßbelastung unterliegt. Durch die Beabstandung von Motortrageinheit und dem Aufnahmegehäuse kann sich das Gehäuse verformen, ohne dass entsprechende Kräfte und/oder Momente unmittelbar von dem Aufnahmegehäuse auf die Motortrageinheit übertragen werden. Durch die Verformung, vorzugsweise elastische Verformung des Gehäuses werden die Trägheitskräfte des Aufnahmegehäuses sowie des mindestens einen Akkupacks Energie aufgenommen, noch bevor das Aufnahmegehäuse die Motortrageinheit durch die Verformung des Gehäuses kontaktieren kann. Die dann verbleibendenden, von dem Aufnahmegehäuse auf die Motortrageinheit übertragbaren Kräfte sind erheblich reduziert.

Jede Verbindung zwischen dem Gehäuse und der Motortrageinheit ist insbesondere frei von einem separat ausgebildeten Antivibrationselement. Ganz insbesondere ist jede Verbindung zwischen dem Gehäuse und dem Aufnahmegehäuse frei von einem separat ausgebildeten Antivibrationselement. Die Dämpfung der von dem Aufnahmegehäuse ausgehenden Kräfte erfolgt somit im Wesentlichen über das Gehäuse.

Das Aufnahmegehäuse weist insbesondere mindestens zwei Aufnahmen zur Aufnahme von zwei Akkupacks auf, wobei zwischen den zwei Aufnahmen eine Öffnung vorgesehen ist, durch die die Motortrageinheit ragt. Demnach befindet sich die Motortrageinheit zwischen den beiden Aufnahmen, die wiederum gegenüber der Motortrageinheit bewegbar ausgebildet sind. Eine unmittelbare Befestigung zwischen den beiden Aufnahmen und der Motortrageinheit ist nicht gegeben.

Es ist bevorzugt vorgesehen, dass die Bauteilsteifigkeit der Motortrageinheit größer ist als die des Gehäuses. Das Gehäuse ist insbesondere aus einem Kunststoff gebildet. Die Motortrageinheit ist insbesondere aus einem Metallwerkstoff, insbesondere aus einer Magnesiumlegierung gebildet. Durch die Ausbildung der Motortrageinheit aus einem Metallwerkstoff ist eine besonders steife Ausgestaltung der Motortrageinheit möglich. Dadurch ist die Motortrageinheit auch unter Betriebsbelastung des Arbeitsgeräts formsteif. Verformungen der Motortrageinheit können somit vermieden werden. Dies begünstigt insbesondere die Laufeigenschaften von sich bewegenden, insbesondere sich drehenden Maschinenteilen, die an der Motortrageinheit befestigt sind. Das Gehäuse ist im Vergleich zur Motortrageinheit aus einem elastischen Werkstoff, insbesondere Kunststoff, gebildet, wodurch sich dieses insbesondere auch elastisch verformen kann.

Es ist besonders vorteilhaft vorgesehen, dass das Arbeitsgerät einen hinteren Handgriff und einen vorderen Handgriff aufweist, wobei dem hinteren Handgriff ein Betätigungselement zur Steuerung des Antriebsmotors zugeordnet ist, und dass die Motortrageinheit ein hinteres Ende und ein vorderes Ende aufweist, und dass das hintere Ende dem Werkzeug abgewandt und das vordere Ende dem Werkzeug zugewandt ist, , wobei im hinteren Bereich der Motortrageinheit der hintere Handgriff und im vorderen Bereich der Motortrageinheit der vordere Handgriff befestigt ist. Zwischen dem vorderen Ende und dem hinteren Ende der Motortrageinheit ist der Antriebsmotor befestigt. Besonders bevorzugt ist im Bereich des hinteren Endes, insbesondere am hinteren Ende der Motortrageinheit der hintere Handgriff befestigt ist und im Bereich des vorderen Endes, insbesondere am vorderen Ende der Motortrageinheit der vordere Handgriff.

Ferner betrifft die Erfindung ein Arbeitsgerät gemäß den Merkmalen des Oberbegriffs des Anspruchs 8.

Es sind handgeführte Arbeitsgeräte, insbesondere Trennschleifer, bekannt, die ein Gehäuse, einen im Gehäuse angeordneten Elektromotor und eine Motortrageinheit umfassen. Der Elektromotor sowie das Gehäuse sind an der Motortrageinheit gehalten. Über den Elektromotor wird ein an das Arbeitsgerät montierbares Werkzeug angetrieben. Es ist bekannt, als elektrische Energiequelle für den Elektromotor einen Akkupack, der am Gehäuse gehalten ist, vorzusehen. Um einen längeren Betrieb und eine höhere Leistung des Arbeitsgerätes zu erzielen, werden auch zwei Akkupacks in einem Arbeitsgerät eingesetzt. Nachteilig an einem Einsatz zweier Akkupacks in einem Arbeitsgerät ist, dass zur Unterbringung des Akkupacks an oder im Gehäuse des Arbeitsgerätes ein vergleichsweise großer Bauraum erforderlich ist. Teilweise sind derartige Arbeitsgeräte auch unhandlich in der Bedienung.

Es ist daher Aufgabe der Erfindung, ein Arbeitsgerät anzugeben, dass zur Aufnahme mehrerer Akkupacks vorgesehen ist und dennoch einen kompakten Bauraum und eine zugleich bedienerfreundliche Handhabung aufweist.

Diese Aufgabe wird durch ein Arbeitsgerät gemäß den Merkmalen des Anspruchs 8 gelöst.

Das erfindungsgemäße Arbeitsgerät umfasst ein Gehäuse, eine vom Gehäuse separat ausgebildete Motortrageinheit, die mit dem Gehäuse verbunden ist, einen im Gehäuse angeordneten Antriebsmotor, wobei der Antriebsmotor als Elektromotor ausgebildet ist und an der Motortrageinheit befestigt ist, ein Aufnahmegehäuse mit mindestens einer ersten Aufnahme und mindestens einer zweiten Aufnahme zur Aufnahme jeweils eines Akkupacks, wobei die Motortrageinheit zumindest teilweise zwischen der ersten Aufnahme und der zweiten Aufnahme angeordnet ist.

Durch diese Anordnung aus Motortrageinheit und der ersten Aufnahme und der zweiten Aufnahme ist eine gleichmäßige Bauraumaufteilung, insbesondere eine symmetrische Bauraumaufteilung möglich. Somit weist das Arbeitsgerät eine kompakte Bauweise auf. Eine derartige Bauraumaufteilung, insbesondere eine symmetrische Anordnung der Aufnahmen, insbesondere der Akkupacks bezogen auf die Motortrageinheit ermöglichen eine optimierte Gewichtsverteilung. Dies begünstigt wiederum die Handhabung des Arbeitsgerätes.

Es ist insbesondere vorgesehen, dass die Motortrageinheit einen Mittelabschnitt aufweist, wobei der Mittelabschnitt eine erste Krümmung und eine zweite Krümmung aufweist, wobei die erste Krümmung und die zweite Krümmung gegensinnig zueinander verlaufen. Durch die Ausbildung der beiden zueinander gegensinnig verlaufenden Krümmungen weist der Mittelabschnitt einen Versatz auf. Somit ergibt sich ein Bereich der Motortrageinheit, der nahe am Gehäuse angeordnet ist und somit viel Bauraum im Gehäuse freigibt. In diesem Bereich der Motortrageinheit ist vorzugsweise der Antriebsmotor angeordnet. Der andere Bereich ist durch den Mittelabschnitt gegenüber dem einen Bereich versetzt angeordnet und verläuft somit mittig durch den restlichen Bauraum im Gehäuse des Arbeitsgerätes. Somit wird der verbleibende Bauraum durch den anderen Bereich der Motortrageinheit in zwei kleinere Bauräume unterteilt. In beiden Bauräumen ist jeweils eine Aufnahme des Aufnahmegehäuses vorgesehen. Die Motortrageinheit wird an den notwendigen Bauraum der Aufnahmen, insbesondere den der Akkupacks, angepasst, wodurch dieser kompakt gestaltet werden kann.

Die erste Krümmung weist eine erste Krümmungsachse auf. Die zweite Krümmung weist eine zweite Krümmungsachse auf. Die erste Krümmungsachse der ersten Krümmung und die zweite Krümmungsachse der zweiten Krümmung sind insbesondere parallel zueinander ausgerichtet. Die Motortrageinheit ist somit nur einfach gekrümmt. Dadurch ist insbesondere die Bauteilherstellung vereinfacht. Bauteile mit einfacher Krümmung lassen sich deutlich einfacher gießen und entformen als zweifach gekrümmte Bauteile.

Es ist insbesondere vorgesehen, dass die Motortrageinheit einen ersten Längsabschnitt und einen zweiten Längsabschnitt aufweist, die insbesondere parallel zueinander ausgerichtet sind, wobei der erste Längsabschnitt und der zweite Längsabschnitt über den Mittelabschnitt miteinander verbunden sind. Somit sind der erste Längsabschnitt und der zweite Längsabschnitt versetzt zueinander angeordnet.

Der erste Längsabschnitt der Motortrageinheit ist insbesondere zwischen der ersten Aufnahme des Aufnahmegehäuses und der zweiten Aufnahme des Aufnahmegehäuses angeordnet. Die erste Aufnahme und die zweite Aufnahme sind insbesondere als Aufnahmeschächte ausgebildet. Der erste Längsabschnitt verläuft zentral im Gehäuseinnenraum und unterteilt diesen, wie oben ausgeführt, in zwei kleinere Bauräume. In einem jeden der zwei kleineren Bauräume ist ein Aufnahmeschacht für ein Akkupack vorgesehen. Sind die Akkupacks als Schlittenakkupacks ausgebildet, können die zwei kleineren Bauräume als freier Bauraum ausgebildet sein, die die Aufnahme jeweils mindestens eines Schlittenakkupacks ermöglichen. An dem zweiten Längsabschnitt der Motortrageinheit ist der Antriebsmotor befestigt. Der zweite Längsabschnitt ist gegenüber dem ersten Längsabschnitt zum Gehäuse hin versetzt angeordnet. Durch die seitliche Anordnung des zweiten Längsabschnittes am Gehäuse gibt die Motortrageinheit im Gehäuseinnenraum einen vergleichsweise großen Bauraum frei, in welchen der Antriebsmotor angeordnet werden kann.

Es ist insbesondere vorgesehen, dass die Motortrageinheit eine Motortragplatte ist, die insbesondere aus einer Metalllegierung, insbesondere aus einer Magnesiumlegierung ausgebildet ist. Dadurch weist die Motortragplatte eine hohe Steifigkeit auf.

Es ist bevorzugt vorgesehen, dass die Motortragplatte ein Gussbauteil mit einer Hauptentformungsrichtung ist, wobei die Hauptentformungsrichtung der Richtung einer Drehachse des Antriebsmotors entspricht. Dies begünstigt wiederum die Ausbildung einer Motoraufnahme an der Motortrageinheit. Diese ist vorzugsweise aus einem Hohlschaft gebildet, an dem der Rotor des Antriebsmotors, insbesondere die Antriebswelle des Antriebsmotors gelagert ist. Auf dem Hohlschaft sitzt insbesondere der Stator, der mit der Motortrageinheit fest verbunden ist.

Es ist insbesondere vorgesehen, dass das Arbeitsgerät einen hinteren Handgriff und einen vorderen Handgriff aufweist, wobei dem hinteren Handgriff ein Betätigungselement zur Steuerung des Antriebsmotors zugeordnet ist. Die Motortrageinheit weist insbesondere ein hinteres Ende und ein vorderes Ende auf. Das hintere Ende ist insbesondere dem Werkzeug abgewandt. Das vordere Ende ist insbesondere dem Werkzeug zugewandt. Im hinteren Bereich der Motortrageinheit ist vorzugsweise der hintere Handgriff und im vorderen Bereich der Motortrageinheit vorteilhaft der vordere Handgriff befestigt.

Das Arbeitsgerät ist insbesondere als Trennschleifer, als Motorsäge oder dergleichen Arbeitsgerät ausgebildet.

Nachfolgend sind Ausführungsbeispiele der Erfindung anhand der Zeichnung erläutert. Es zeigen:
- Fig. 1: in einer perspektivischen Darstellung eine erfindungsgemäße Ausführung des handgeführten Arbeitsgerätes,
- Fig. 2: in einer Seitenansicht das handgeführte Arbeitsgerät nach Fig. 1,
- Fig. 3: in einer Seitenansicht das handgeführte Arbeitsgerät nach Fig. 1 werkzeuglos und teilweise ohne Abdeckung des Auslegers,
- Fig. 4: in einer ausschnittsweisen Seitendarstellung den Ausleger des Arbeitsgerätes nach Fig. 1 mit Riemenscheibe und Riemen,
- Fig. 5: in einer Blickrichtung von oben eine Schnittdarstellung des erfindungsgemäßen Arbeitsgerätes nach Fig. 1,
- Fig. 6: in einer Blickrichtung von oben eine Schnittdarstellung des Arbeitsgerätes nach Fig. 1 entlang der Befestigungspunkte des Gehäuses an die Motortrageinheit,
- Fig. 7: in einer Blickrichtung von hinten eine Schnittdarstellung des Arbeitsgerätes nach Fig. 1,
- Fig. 8: in einer perspektivischen Darstellung von hinten die Motortrageinheit des Arbeitsgerätes nach Fig. 1,
- Fig. 9: in einer perspektivischen Darstellung von vorne die Motortrageinheit des Arbeitsgerätes nach Fig. 1,
- Fig. 10: in einer Draufsicht die Motortrageinheit des Arbeitsgerätes nach Fig. 1,
- Fig. 11: in einer Ansicht von unten die Motortrageinheit des Arbeitsgerätes nach Fig. 1,
- Fig. 12: in einer seitlichen, perspektivischen Darstellung das Arbeitsgerät nach Fig. 1 in der Offenstellung der Schutzhaube,
- Fig. 13: in einer seitlichen, perspektivischen Darstellung das Arbeitsgerät nach Fig. 1 in der Endstellung der Schutzhaube,
- Fig. 14: in einer Seitendarstellung das Arbeitsgerät nach Fig. 1 mit schematisch dargestellter Schutzhaube in Offenstellung und Endstellung,
- Fig. 15: in einer Darstellung von unten das Arbeitsgerät nach Fig. 1 und
- Fig. 16: in einer seitlichen, vergrößerten Darstellung Anschlag und Gegenanschlag des Arbeitsgerätes nach Fig. 1 im Kontakt.

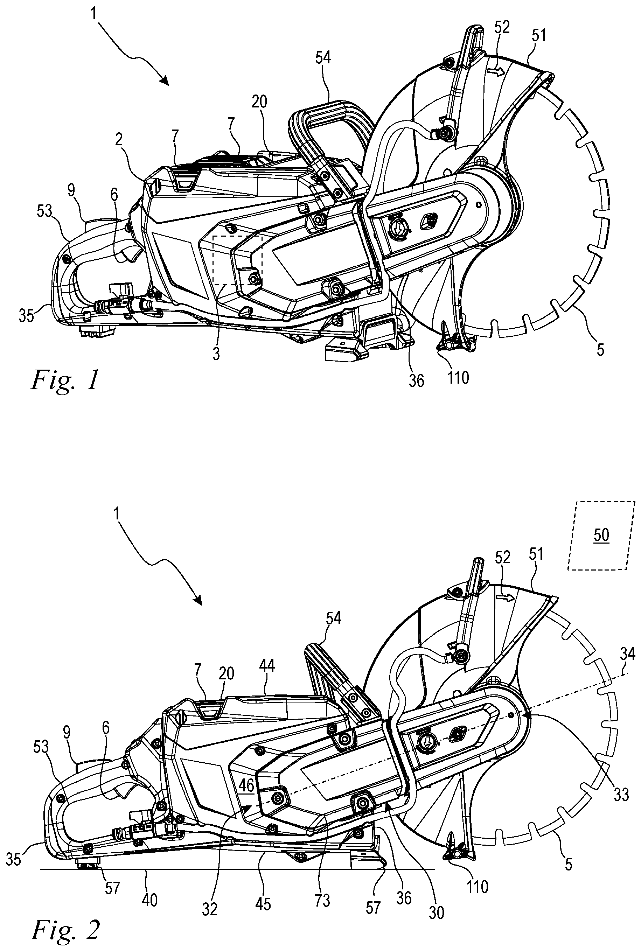

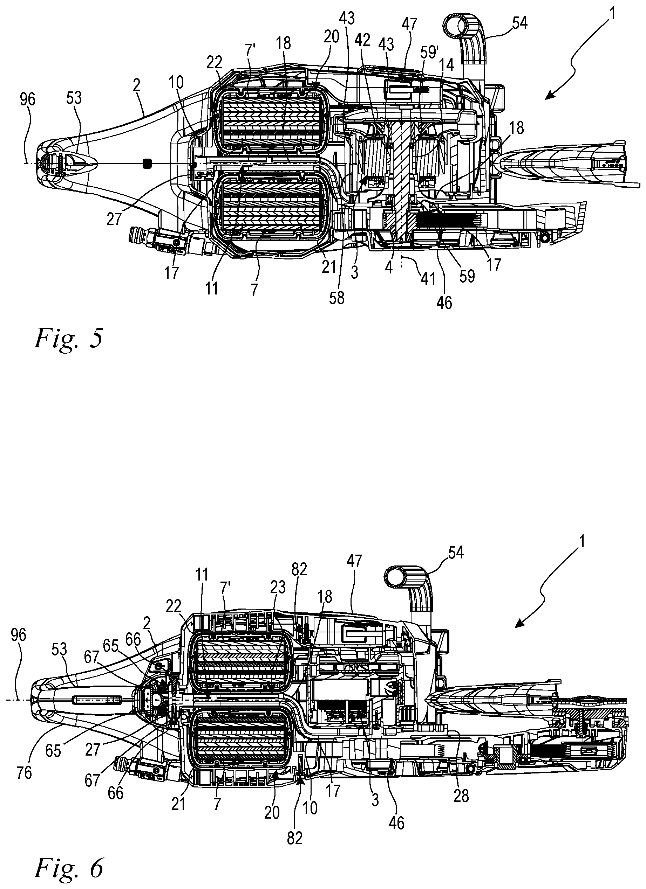

Fig. 1 zeigt ein Ausführungsbeispiel des handgeführten Arbeitsgerätes 1 als Trennschleifer. Das Arbeitsgerät 1 kann alternativ auch als Motorsäge oder als anderes Arbeitsgerät ausgebildet sein. Das Arbeitsgerät 1 ist handgeführt, insbesondere handgetragen. Das Arbeitsgerät 1 wird im Betrieb vom Bediener getragen und geführt. Das Arbeitsgerät 1 weist ein Gehäuse 2 auf. Ferner umfasst das Arbeitsgerät 1 einen Antriebsmotor 3 (Fig. 5), wobei der Antriebsmotor 3 im Gehäuse 2 angeordnet ist. In Fig. 1 ist der Antriebsmotor 3 lediglich schematisch durch ein gestricheltes Viereck dargestellt. Im vorliegenden Ausführungsbeispiel ist der Antriebsmotor 3 als Elektromotor ausgebildet. In einer alternativen Ausführung kann der Antriebsmotor 3 auch als Verbrennungsmotor ausgebildet sein. Der Antriebsmotor 3 dient zum Antrieb eines an dem Arbeitsgerät 1 anordenbares Werkzeug 5. Das Werkzeug 5 ist in dem vorliegenden Ausführungsbeispiel als Trennscheibe ausgebildet.

Wie in den Figuren 5 und 6 gezeigt, umfasst das Arbeitsgerät 1 mindestens einen Akkupack 7 zur elektrischen Energieversorgung des Antriebsmotors 3. Besonders bevorzugt umfasst das Arbeitsgerät 1 einen weiteren Akkupack 7' zur Energieversorgung des Antriebsmotors 3. Zur Aufnahme des mindestens einen Akkupacks 7 und/oder des weiteren Akkupacks 7' ist ein Aufnahmegehäuse 20 vorgesehen. Das Aufnahmegehäuse 20 ist an dem Gehäuse 2 angeordnet, insbesondere fixiert. In der vorliegenden Ausführung des Arbeitsgerätes 1 ist das Aufnahmegehäuse 20 als ein gegenüber dem Gehäuse 2 separates Bauteil ausgebildet. In einer alternativen Ausführung kann es auch vorgesehen sein, dass das Aufnahmegehäuse 20 und das Gehäuse 2 einteilig ausgebildet sind, insbesondere das Aufnahmegehäuse 20 integraler Bestandteil des Gehäuses 2 ist. Das Aufnahmegehäuse 20 umfasst eine erste Aufnahme 21 zur Aufnahme des mindestens einen Akkupacks 7. Ferner umfasst das Aufnahmegehäuse 20 eine zweite Aufnahme 22 zur Aufnahme des weiteren Akkupacks 7'. Die Akkupacks 7, 7' sind werkzeuglos dem Aufnahmegehäuse 20, insbesondere den Aufnahmen 21, 22 entnehmbar. Die Akkupacks 7, 7' werden zu deren Befestigung am Arbeitsgerät 1 in das Aufnahmegehäuse 20, insbesondere in die Aufnahmen 21, 22 eingesteckt und verrastet. Die Verrastung kann werkzeuglos gelöst werden und die Akkupacks 7, 7' wieder aus dem Aufnahmegehäuse 20, insbesondere den Aufnahmen 21, 22, beispielsweise zum Aufladen oder einfach zu deren Wechsel, entnommen werden. Die Akkupacks 7, 7' können alternativ als Schlittenakkupacks ausgebildet sein.

Wie in den Fig. 1 und 2 gezeigt, umfasst das Arbeitsgerät 1 einen hinteren Handgriff 53. Ferner umfasst das Arbeitsgerät 1 einen vorderen Handgriff 54. Der vordere Handgriff 54 ist bevorzugt als Griffrohr ausgebildet. Auch andere Ausgestaltungen des vorderen Handgriffes 54 können zweckmäßig sein. Das Gehäuse 2 erstreckt sich von einem hinteren Ende 35 bis zu einem vorderen Ende 36. Der hintere Handgriff 53 bildet vorliegend das hintere Ende 35 des Gehäuses 2. In einer alternativen Ausführung kann es auch vorgesehen sein, dass der hintere Handgriff 53 separat gegenüber dem Gehäuse 2 ausgebildet ist. In einer solchen Ausführung ist der hintere Handgriff 53 im Bereich des hinteren Endes 35 des Gehäuses 2 angeordnet. Der vordere Handgriff 54 ist im Bereich des vorderen Endes 36 des Gehäuses 2 angeordnet.

Zudem weist das Arbeitsgerät 1 ein Bedienelement 6 auf, wobei das Bedienelement 6 zur Ansteuerung des Antriebsmotors 3 vorgesehen ist. Das Bedienelement 6 ist als Bedienhebel ausgebildet. Das Bedienelement 6 ist dem hinteren Handgriff 53 zugeordnet. Ferner umfasst das Arbeitsgerät 1 ein Sperrelement 9, welches in einer Sperrstellung das Bedienelement 6 sperrt und in einer Freigabestellung das Bedienelement 6 zur Betätigung freigibt. Das Sperrelement 9 ist vorzugsweise als Sperrhebel ausgebildet. Die Sperr- sowie die Freigabefunktion durch das Sperrelement 9 können mechanisch und/oder elektronisch, beispielsweise durch Sensoren, erfolgen. Das Sperrelement 9 ist dem hinteren Handgriff 53 zugeordnet. Das bedeutet, dass der Bediener beim Greifen des hinteren Handgriffs 53 das Bedienelement 6 sowie das Sperrelement 9 betätigen kann. Im bevorzugten Ausführungsbeispiel sind das Bedienelement 6 und das Sperrelement 9 am hinteren Handgriff 53 angeordnet.

Besonders bevorzugt umfasst das Arbeitsgerät 1 eine nicht näher dargestellte Steuereinheit. Die Steuereinheit verarbeitet Signale, die durch das Bedienelement 6 und/oder das Sperrelement 9 erzeugt werden, und dient im Wesentlichen zur Steuerung des Antriebsmotors 3. Auch andere Funktionen des Arbeitsgerätes 1 können über die Steuereinheit umgesetzt werden.

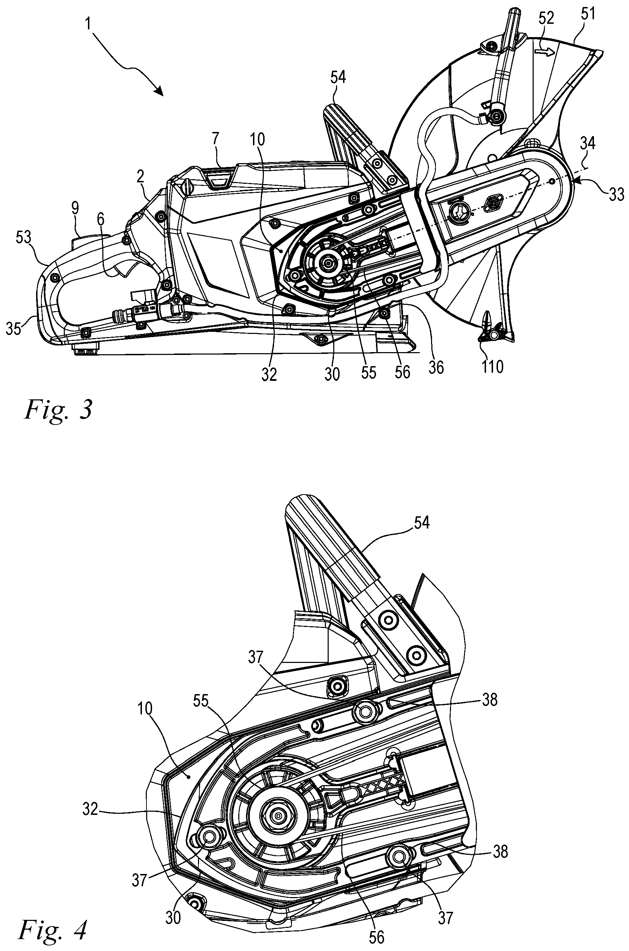

Wie in Fig. 3 gezeigt, umfasst das Arbeitsgerät 1 einen Ausleger 30. Der Ausleger 30 erstreckt sich entlang seiner Längsmittelachse 34 von einem proximalen Ende 32 bis zu einem distalen Ende 33. Der Ausleger 30 ist zumindest mittelbar an dem Gehäuse 2 festgelegt. Der Ausleger 30 ist insbesondere im Bereich des vorderen Endes 36 des Gehäuses 2 mittelbar am Gehäuse 2 festgelegt. Der Ausleger 30 ragt über das vordere Ende 36 des Gehäuses 2 hinaus und erstreckt sich mit seinem distalen Ende 33 von dem vorderen Ende 36 des Gehäuses 2 weg. An dem distalen Ende 33 des Auslegers 30 ist das Werkzeug 5 anordenbar. Das Werkzeug 5 ist an dem distalen Ende 33 des Auslegers 30 drehbar gelagert. Im Betrieb des Arbeitsgerätes 1 ist das Werkzeug 5 vom Antriebsmotor 3 in einer Drehrichtung 52 (Fig. 1 und 3) rotierend angetrieben.

Wie in den Figuren 3 und 4 gezeigt, umfasst das Arbeitsgerät 1 eine Riemenscheibe 55, die über den Antriebsmotor 3 angetrieben ist. Ferner umfasst das Arbeitsgerät 1 eine nicht näher dargestellte weitere Riemenscheibe, die an dem distalen Ende 33 des Auslegers 30 angeordnet ist und mit dem Werkzeug 5 in Drehrichtung 52 des Werkzeuges 5 fest verbunden ist. Das Werkzeug 5 sowie die weitere Riemenscheibe sind selbstverständlich demontierbar, wodurch diese jeweils einzeln ausgetauscht werden können. Die Riemenscheibe 55, die vorzugsweise im Bereich des proximalen Endes 32 des Auslegers 30 am Gehäuse 2 angeordnet ist, ist mit der weiteren Riemenscheibe über einen Riemen 56 wirkverbunden. Der Riemen 56 dient zur Drehzahl- und Drehmomentübertragung zwischen dem Antriebsmotor 3 und dem Werkzeug 5.

Wie in den Fig. 1 und 2 gezeigt, umfasst das Arbeitsgerät 1 eine Schutzhaube 51. Die Schutzhaube 51 ist an dem Ausleger 30, insbesondere an dem distalen Ende 33 des Auslegers 30, befestigt. Die Schutzhaube 51 deckt das Werkzeug 5 über einen Teil seines Umfangs ab.

Wie in Fig. 2 gezeigt, umfasst das Arbeitsgerät 1 eine Oberseite 44 und eine Unterseite 45, wobei das Arbeitsgerät 1 auf der Unterseite 45 auf einen Boden 40 abstellbar ist. Die Oberseite 44 und die Unterseite 45 sind durch eine erste Längsaußenseite 46 und eine zweite Längsaußenseite 47 miteinander verbunden. Ausdrücke, die Seiten oder andere Bauteile des Arbeitsgerätes 1 mittels Raumangaben beschreiben, beispielsweise "Oberseite" und "Unterseite", beziehen sich dabei grundsätzlich auf die in Fig. 2 gezeigte übliche Abstellposition des Arbeitsgerätes 1. Die übliche Abstellposition des Arbeitsgerätes 1 ist eine Position, in der das Arbeitsgerät 1 auf einer ebenen, horizontalen Abstellfläche abgestellt ist. Zum Abstellen des Arbeitsgerätes 1 dienen Standfüße 57.

Wie in den Figuren 5 bis 7 gezeigt, umfasst das Arbeitsgerät 1 eine Motortrageinheit 10. Die Motortrageinheit 10 ist gegenüber dem Gehäuse 2 separat ausgebildet. Der Antriebsmotor 3 ist an der Motortrageinheit 10 vorzugsweise unmittelbar befestigt. Das Gehäuse 2 ist ebenfalls an der Motortrageinheit 10 befestigt.

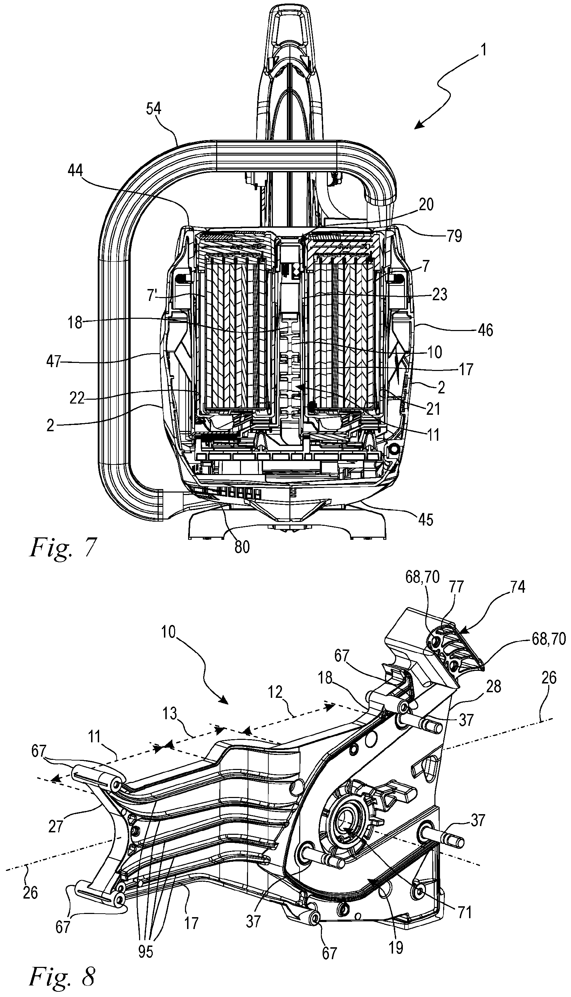

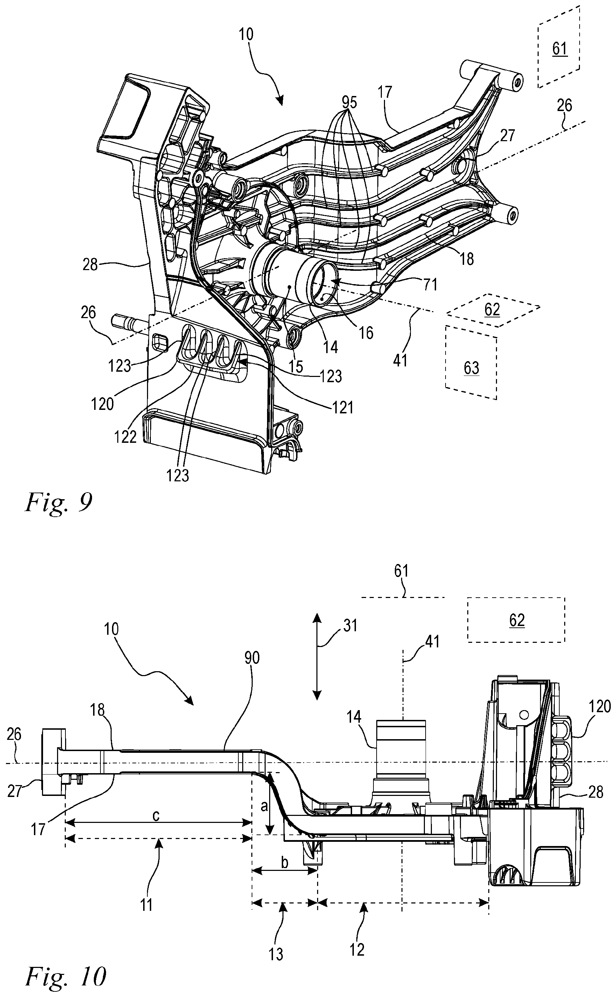

Wie in den Figuren 8 und 9 gezeigt, ist die Motortrageinheit 10 als eine Motortragplatte ausgebildet. Die Motortrageinheit 10 weist eine Längserstreckung auf. Die Motortrageinheit 10 umfasst ein hinteres Ende 27 und ein vorderes Ende 28. An dem hinteren Ende 27 der Motortrageinheit 10 ist der hintere Handgriff 53 angeordnet. An dem vorderen Ende 28 ist der vordere Handgriff 54 angeordnet. Die Motortrageinheit 10 weist eine Längsmittelachse 26 auf, die sich von dem hinteren Ende 27 der Motortrageinheit 10 bis zu dem vorderen Ende 28 der Motortrageinheit 10 erstreckt. Die Längsmittelachse 26 liegt in einer Längsebene 61 der Motortrageinheit 10. Die Längsebene 61 ist parallel zur Werkzeugebene 50 ausgerichtet. In einer alternativen Ausführung des Arbeitsgerätes 1 kann es auch vorgesehen sein, dass die Längsebene 61 der Motortrageinheit 10 der Werkzeugebene 50 entspricht.

Wie in Fig. 9 gezeigt, umfasst die Motortrageinheit 10 eine Motoraufnahme 14, die in der vorliegenden Ausführung insbesondere als Hohlschaft ausgebildet ist. Die Motoraufnahme 14, insbesondere der Hohlschaft, weist eine Außenseite 15 und eine Innenseite 16 auf. In dem Hohlschaft ist die Antriebswelle 4 des Antriebsmotors 3 drehbar um eine Drehachse 41 gelagert (Fig. 5).

Wie in Fig. 5 gezeigt, umfasst der als Elektromotor ausgebildete Antriebsmotor 3 einen Stator 42 und einen Rotor 43. Der Stator 42, der eine Vielzahl von Spulen umfasst, ist auf der Außenseite 15 des Hohlschaftes insbesondere unmittelbar angeordnet. Der Rotor 43 umfasst wiederum die Antriebswelle 4 und einen den Stator 42 übergreifenden Rotorabschnitt 58. Der Rotorabschnitt 58 ist mit entsprechenden Dauermagneten versehen, die mit den Spulen des Stators 42 zusammenwirken. Der Rotorabschnitt 58 und die Antriebswelle 4 sind drehfest miteinander verbunden. Der Rotor 43 ist über seine Antriebswelle 4 mittels zweier Lager 59, 59' an der Innenseite 16 des Hohlschaftes gegen diesen drehbar gelagert. Der Elektromotor ist vorliegend als Außenläufer ausgebildet. In einer alternativen Ausführung des Arbeitsgerätes 1 kann es auch zweckmäßig sein, den Elektromotor als Innenläufer auszubilden.

Wie in Fig. 9 gezeigt, ist die Drehachse 41 der Antriebswelle 4 in etwa senkrecht zur Längsebene 61 der Motortrageinheit 10 ausgerichtet. Die Drehachse 41 liegt innerhalb einer Hochebene 63 der Motortrageinheit 10. Die Hochebene 63 der Motortrageinheit 10 ist senkrecht zur Längsmittelachse 26, insbesondere senkrecht zur Längsebene 61 ausgerichtet. Ferner besitzt die Motortrageinheit 10 eine Querebene 62, die senkrecht zur Hochebene 63 und senkrecht zur Längsebene 61 ausgerichtet ist.

Wie in den Figuren 8 und 10 gezeigt, weist die Motortrageinheit 10 einen ersten Längsabschnitt 11, einen zweiten Längsabschnitt 12 und einen Mittelabschnitt 13 auf. Der Mittelabschnitt 13 ist zwischen dem ersten Längsabschnitt 11 und dem zweiten Längsabschnitt 12 vorgesehen. Der erste Längsabschnitt 11 und der zweite Längsabschnitt 12 sind vorzugsweise über den Mittelabschnitt 13 miteinander verbunden. Die genannten Abschnitte unterteilen die Motortrageinheit 10 in Richtung der Längsmittelachse 26. Der erste Längsabschnitt 11 erstreckt sich von dem hinteren Ende 27 der Motortrageinheit 10 bis zum Mittelabschnitt 13 der Motortrageinheit 10. Der Mittelabschnitt 13 der Motortrageinheit 10 erstreckt sich von dem ersten Längsabschnitt 11 der Motortrageinheit 10 bis zu dem zweiten Längsabschnitt 12 der Motortrageinheit 10. Der zweite Längsabschnitt 12 der Motortrageinheit 10 erstreckt sich von dem Mittelabschnitt 13 der Motortrageinheit 10 bis zu dem vorderen Ende 28 der Motortrageinheit 10.

Wie insbesondere in Fig. 10 gezeigt, ist der Mittelabschnitt 13 in einer Draufsicht auf die Motortrageinheit 10, also in Richtung senkrecht auf die Querebene 62 der Motortrageinheit 10 in etwa Z-förmig ausgebildet. Der Mittelabschnitt 13 weist eine erste Krümmung 91 und eine zweite Krümmung 92 auf, wobei die erste Krümmung 91 und die zweite Krümmung 92 gegensinnig zueinander verlaufen. Durch die Anordnung dieser beiden Krümmungen 91, 92 zueinander weist der Mittelabschnitt 13 die in etwa Z-förmige Kontur auf. Die erste Krümmung 91 weist eine erste Krümmungsachse 93 auf. Die zweite Krümmung 92 weist eine zweite Krümmungsachse 94 auf. Die erste Krümmungsachse 93 der ersten Krümmung 91 und die zweite Krümmungsachse 94 der zweiten Krümmung 92 sind parallel zueinander ausgerichtet. Die Motortrageinheit 10 ist somit nur einfach gekrümmt. Die erste Krümmungsachse 93 der ersten Krümmung 91 und die zweite Krümmungsachse 94 der zweiten Krümmung 92 sind senkrecht zur Querebene 62 ausgerichtet.

Der erste Längsabschnitt 11 und der zweite Längsabschnitt 12 sind im Wesentlichen parallel zueinander ausgerichtet. Durch die entgegengesetzten Krümmungen 91, 92 des Mittelabschnittes 13 der Motortrageinheit 10 sind der erste Längsabschnitt 11 und der zweite Längsabschnitt 12 in Richtung senkrecht zur Längsebene 61 der Motortrageinheit 10 versetzt zueinander angeordnet. Die Motortrageinheit 10 weist eine erste Außenseite 17 und eine zweite Außenseite 18 auf. Der Mittelabschnitt 13 der Motortrageinheit 10 weist eine Versatzbreite a auf, die in Richtung senkrecht zur Längsebene 61 der Motortrageinheit 10 an der ersten Außenseite 17 der Motortrageinheit 10 gemessen ist. Die Versatzbreite a entspricht dem in Richtung senkrecht zur Längsebene 61 gemessenen maximalen Abstand der jeweiligen Übergangsbereiche des Mittelabschnittes 13 zum ersten Längsabschnitt 11 respektive zum zweiten Längsabschnitt 12 auf der ersten Außenseite 17. Ferner weist der Mittelabschnitt 13 der Motortrageinheit 10 eine in Richtung der Längsmittelachse 26 gemessene Länge b auf, die dem Abstand zwischen dem ersten Längsabschnitt 11 und dem zweiten Längsabschnitt 12 entspricht. Die Versatzbreite a des Mittelabschnittes 13 der Motortrageinheit 10 entspricht mindestens 50%, vorzugsweise mindestens 70%, insbesondere mindestens 90% der Länge b des Mittelabschnittes 13 der Motortrageinheit 10. Ferner weist der erste Längsabschnitt 11 eine in Richtung der Längsmittelachse 26 gemessenen Länge c auf, die dem Abstand zwischen dem hinteren Ende 27 und dem Mittelabschnitt 13 entspricht. Die Versatzbreite a des Mittelabschnittes 13 der Motortrageinheit 10 entspricht mindestens 10%, insbesondere mindestens 20% der Länge c des ersten Mittelabschnittes 11 der Motortrageinheit 10.

Wie bereits oben ausgeführt, ist die Motortrageinheit 10 einfach gekrümmt. Diese Ausgestaltung der Motortrageinheit 10 ermöglicht neben den räumlichen Gestaltungen im Gehäuseinnenraum auch die Ausbildung einer Hauptentformungsrichtung 31. Diese entspricht auch der Richtung der Drehachse 41. Dies ermöglicht wiederum die Ausgestaltung der Motoraufnahme 14 in Form eines Hohlschaftes. Der Gehäuseinnenraum ist durch das Gehäuse 2 begrenzt. Bauteile mit einfacher Krümmung lassen sich deutlich einfacher Gießen und Entformen als zweifach gekrümmte Bauteile. Die hierfür erforderlichen Werkzeuge können einfacher ausgebildet werden.

Wie in den Figuren 6 und 8 gezeigt, umfasst das Arbeitsgerät 1 erste Befestigungseinheiten 65, die zur Befestigung des Gehäuses 2 an der Motortrageinheit 10 vorgesehen sind. Eine jede erste Befestigungseinheit 65 umfasst ein erstes Befestigungsmittel 66, das vorliegend als eine Schraube ausgebildet ist, und eine erste Befestigungsaufnahme 67, welche als eine Öffnung mit Innengewinde zur Aufnahme der Schraube ausgebildet ist. An dem hinteren Ende 27 der Motortrageinheit 10 ist mindestens eine erste Befestigungsaufnahme 67, vorliegend vier erste Befestigungsaufnahmen 67, ausgebildet. Ferner sind in dem Mittelabschnitt 13 der Motortrageinheit 10 und an dem vorderen Ende 28 der Motortrageinheit 10 weitere erste Befestigungsaufnahmen 67 zur Anbindung des Gehäuses 2 an die Motortrageinheit 10 vorgesehen. Vorzugsweise ist auch an dem zweiten Längsabschnitt 12 der Motortrageinheit 10 mindestens eine erste Befestigungsaufnahme 67 angeordnet. Der erste Längsabschnitt 11 der Motortrageinheit 10 ist hingegen frei von ersten Befestigungseinheiten 65, insbesondere von ersten Befestigungsaufnahmen 67.

Wie in den Figuren 5 und 6 gezeigt, ist der Antriebsmotor 3 im zweiten Längsabschnitt 12 der Motortrageinheit 10 befestigt. Der Antriebsmotor 3 ist im Wesentlichen auf der zweiten Außenseite 18 der Motortrageinheit 10 angeordnet. Auch die Motoraufnahme 14 ist an der zweiten Außenseite 18 der Motortrageinheit 10 ausgebildet.

Wie insbesondere in Fig. 8 gezeigt, umfasst die Motortrageinheit 10 einen Befestigungsabschnitt 19. Der Befestigungsabschnitt 19 dient zur Befestigung eines Bauteils an der Motortrageinheit 10, wobei an dem Bauteil wiederum das Werkzeug 5 gehalten ist. In der vorliegenden Ausführung des Arbeitsgerätes 1 ist der Befestigungsabschnitt zur Befestigung des Auslegers 30 an der Motortrageinheit 10 vorgesehen. Ist das Arbeitsgerät 1 als Motorsäge ausgebildet, ist der Befestigungsabschnitt 19 vorzugsweise dazu vorgesehen, eine Führungsschiene daran zu befestigen. Auf der Führungsschiene wäre dann die Sägekette als Werkzeug geführt. Der Befestigungsabschnitt 19 ist an der ersten Außenseite 17 des Auslegers 10 ausgebildet. Der Befestigungsabschnitt 19 erstreckt sich im vorliegenden Ausführungsbeispiel von dem Mittelabschnitt 13 über den zweiten Längsabschnitt 12 bis hin zum vorderen Ende 28 der Motortrageinheit 10. Im Bereich des Befestigungsabschnittes 19 sind mehrere, vorliegend drei Stehbolzen 37 an der Motortrageinheit 10 angeordnet, insbesondere in die Motortrageinheit 10 eingeschraubt. Der Ausleger 10 liegt, wie in den Figuren 3 und 4 gezeigt, an dem Befestigungsabschnitt 19 der Motortrageinheit 10 an, und ist über die Stehbolzen 37 und die dazugehörigen Muttern 38 an der Motortrageinheit 10 befestigt. Sind die Muttern 38 gelöst, kann der Ausleger 30 in seiner Längsrichtung 34 verschoben werden. Somit kann die Spannung des Riemens 56 eingestellt werden. Die in der Motortrageinheit 10 befestigten Stehbolzen 38 durchgreifen Öffnungen am Ausleger 30, die zur Verschiebbarkeit des Auslegers 30 gegenüber der Motortrageinheit 10 als Langlöcher ausgebildet sind.

Ferner ist an der Motortrageinheit 10 eine Zentralöffnung 71 (Figuren 8 und 9) vorgesehen, die Teil der Motoraufnahme 14, insbesondere Teil des Hohlschaftes, ist. Durch die Zentralöffnung 71 ragt die Antriebswelle 4 des Antriebsmotors 3. Die Antriebswelle 4 ragt von der zweiten Außenseite 18 der Motortrageinheit 10 durch die Zentralöffnung 71 auf die erste Außenseite 17 der Motortrageinheit 10. Ferner ragt die Antriebswelle 4 auch durch eine Öffnung des Auslegers 10. An dem Ende der Antriebswelle 4, welches sich auf der ersten Außenseite 17 der Motortrageinheit 10 befindet, ist die Riemenscheibe 55 angeordnet, die den Riemen 56 antreibt. Der Ausleger 30 ist durch eine Abdeckung 73 verdeckt. Darüber hinaus verdeckt die Abdeckung 73 auch die Riemenscheibe 55 sowie den Riemen 56.

Wie in Fig. 6 gezeigt, ist das Gehäuse 2 an dem hinteren Ende 27 der Motortrageinheit 10 mittels der Befestigungseinheiten 65 befestigt. In diesem Bereich ist das Gehäuse 2 aus einem Griffgehäuse 76 gebildet. Das Griffgehäuse 76 ist über die Befestigungseinheiten 65 an dem hinteren Ende 27 der Motortrageinheit 10 befestigt. An dem Griffgehäuse 76 ist der hintere Handgriff 53 ausgebildet. An dem hinteren Handgriff 53 sind das Betätigungselement 6 und das Sperrelement 9 angeordnet.

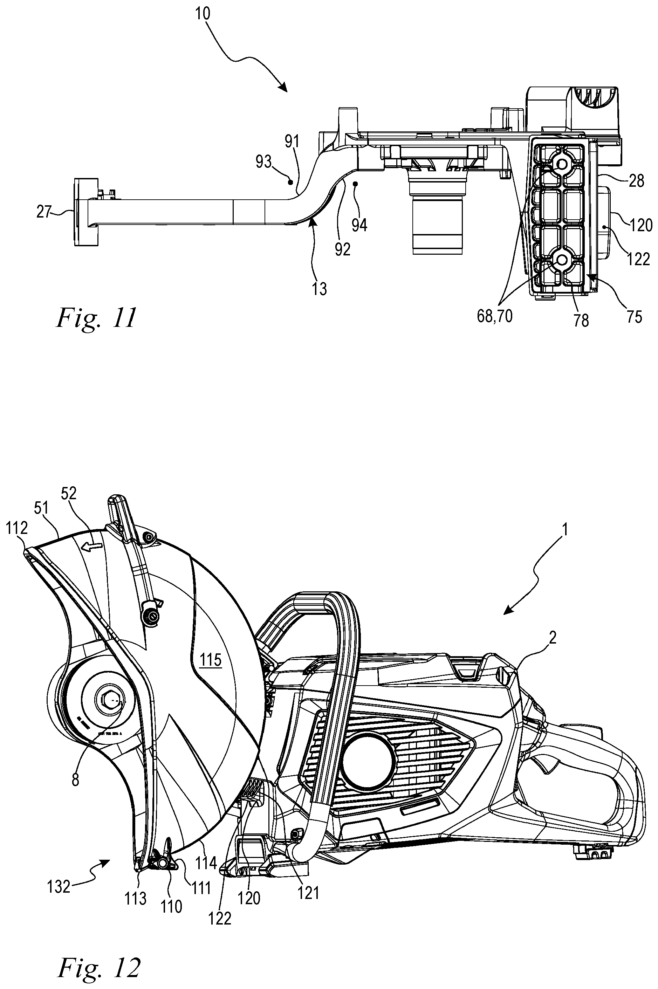

An der Motortrageinheit 10 sind zur Befestigung des vorderen Handgriffes 54 an der Motortrageinheit 10 zweite Befestigungseinheiten 68, insbesondere zweite Befestigungsaufnahmen 70 vorgesehen. Wie insbesondere in den Figuren 8 und 11 gezeigt, sind die zweiten Befestigungseinheiten 68 am vorderen Ende 28 der Motortrageinheit 10 ausgebildet. Auch eine zumindest teilweise andere Positionierung der Befestigungseinheiten 68, beispielsweise im zweiten Längsabschnitt 12 der Motortrageinheit 10, kann zweckmäßig sein.

An der Motortrageinheit 10 ist eine erste, obere Griffaufnahme 74 angeordnet, insbesondere ausgebildet. Die obere Griffaufnahme 74 ist vorzugsweise integraler Bestandteil der Motortrageinheit 10. Die erste, obere Griffaufnahme 74 dient zur Anlage und Befestigung des vorderen Handgriffes 54. Die erste, obere Griffaufnahme 74 der Motortrageinheit 10 ist im Bereich der Oberseite 44 des Arbeitsgerätes 1 sowie im Bereich der ersten Längsaußenseite 46 des Arbeitsgerätes 1 angeordnet. Die erste, obere Griffaufnahme 74 weist eine in etwa halbzylindrische Kontur 77 auf, in der der vordere Handgriff 54 zur Anlage kommt. Der vordere Handgriff 54 ist als Griffrohr ausgebildet. Selbstverständlich sind die Geometrie des Griffrohres sowie die Kontur 77 der oberen Griffaufnahme 74 aufeinander abgestimmt. Im vorliegenden Ausführungsbeispiel ist das Griffrohr zylindrisch ausgebildet, demnach die Kontur 77 eben auch halbzylindrisch ausgebildet ist. Auch andere Geometrien des Griffrohres sowie der Kontur 77 der ersten, oberen Griffaufnahme 74 können zweckmäßig sein, sofern diese aufeinander abgestimmt sind.

In der ersten, oberen Griffaufnahme 74 ist mindestens eine zweite Befestigungsaufnahme 70, vorzugsweise zwei zweite Befestigungsaufnahmen 70 ausgebildet. Die zweiten Befestigungsaufnahmen 70 sind bevorzugt als Öffnungen mit je einem Innengewinde ausgebildet, wodurch der vordere Handgriff 54 mit Schrauben als Befestigungsmittel 69 an der ersten, oberen Griffaufnahme 74 festgeschraubt werden kann. Wie in Fig. 7 gezeigt, erstreckt sich der Handgriff 54 von einem Ende 79 bis zu einem anderen Ende 80.

Vorzugsweise ist das eine Ende 79 des vorderen Handgriffes 54 an der ersten, oberen Griffaufnahme 74 der Motortrageinheit 10 befestigt.

An der Motortrageinheit 10 ist eine zweite, untere Griffaufnahme 75 angeordnet, insbesondere ausgebildet (Fig. 11). Die zweite, untere Griffaufnahme 75 ist vorzugsweise integraler Bestandteil der Motortrageinheit 10. Die zweite, untere Griffaufnahme 75 dient zur Anlage und Befestigung des vorderen Handgriffes 54. Die zweite, untere Griffaufnahme 75 der Motortrageinheit 10 ist im Bereich der Unterseite 45 des Arbeitsgerätes 1 angeordnet. Die zweite, untere Griffaufnahme 75 weist analog der ersten, oberen Griffaufnahme 74 eine in etwa halbzylindrische Kontur 78 auf, in der der vordere Handgriff 54 zur Anlage kommt. In der zweiten, unteren Griffaufnahme 75 ist mindestens eine zweite Befestigungsaufnahme 70, vorzugsweise zwei zweite Befestigungsaufnahmen 70 ausgebildet. Der vordere Handgriff 54 kann mit Schrauben als Befestigungsmittel 69 an der zweiten, unteren Griffaufnahme 75 festgeschraubt werden. Vorzugsweise ist das andere Ende 80 des vorderen Handgriffes 54 an der zweiten, unteren Griffaufnahme 75 der Motortrageinheit 10 befestigt.

Wie in Fig. 7 gezeigt, verläuft der vordere Handgriff 54, insbesondere das Griffrohr, von der ersten, oberen Griffaufnahme 74 über die Oberseite 44 zur zweiten Längsaußenseite 47 des Arbeitsgerätes 1. Von dort aus erstreckt sich der vordere Handgriff 54, insbesondere das Griffrohr, an der zweiten Längsaußenseite 47 entlang bis zur Unterseite 45 des Arbeitsgerätes 1 und endet in der zweiten, unteren Griffaufnahme 75 an der Unterseite 45 des Arbeitsgerätes 1. Der vordere Handgriff 54 ist lediglich über seine zwei Enden 79, 80 an der Motortrageinheit 10 befestigt. In dem Bereich zwischen seinen beiden Enden 79, 80 ist der vordere Handgriff 54 beabstandet zum Gehäuse 2 des Arbeitsgerätes 1 angeordnet, so dass der Bediener den vorderen Handgriff 54 umgreifen kann.

In einer alternativen Ausführung des Arbeitsgerätes 1 kann es auch vorgesehen sein, dass die erste, obere Griffaufnahme 74 an einer anderen Stelle angeordnet ist. So kann die erste, obere Griffaufnahme 74 alternativ in dem Befestigungsabschnitt 19 der Motortrageinheit 10 integriert sein. In einer solchen Ausführung wäre die erste, obere Griffaufnahme 74 im Wesentlichen an der ersten Längsaußenseite 46 angeordnet. Auch andere Positionen sind denkbar. Besonders vorteilhaft ist es jedoch, dass sowohl die erste, obere Griffaufnahme 74 als auch die zweite, untere Griffaufnahme 75 unmittelbar an der Motortrageinheit 10 ausgebildet sind. Somit ist der vordere Handgriff 54 unmittelbar an der Motortrageinheit 10 befestigt. Auch der hintere Handgriff 53, insbesondere das Griffgehäuse 76, ist unmittelbar an der Motortrageinheit 10 befestigt. Besonders bevorzugt ist zwischen dem vorderen Handgriff 54 und der Motortrageinheit 10 kein separat ausgebildetes Antivibrationselement vorgesehen. Bevorzugt ist auch zwischen dem hinteren Handgriff 53 und der Motortrageinheit 10 kein separat ausgebildetes Antivibrationselement vorgesehen. Da in der vorliegenden Ausführung der Antriebsmotor 3 als Elektromotor ausgebildet ist, ist eine Schwingungsentkopplung zwischen dem Antriebsmotor 3 und dem vorderen Handgriff 54 sowie dem hinteren Handgriff 53 nicht erforderlich.

Wie in den Figuren 5 bis 7 gezeigt, ist das Aufnahmegehäuse 20, in dem der mindestens eine Akkupack 7 und/oder der weitere Akkupack 7' angeordnet sind, im Längsabschnitt 11 der Motortrageinheit 10 angeordnet. Das Aufnahmegehäuse 20 liegt somit bezogen auf die Längsrichtung 26 der Motortrageinheit 10 zwischen dem hinteren Ende 27 der Motortrageinheit 10 und dem Mittelabschnitt 13 der Motortrageinheit 10. Die erste Aufnahme 21 des Aufnahmegehäuses 20 und die zweite Aufnahme 22 des Aufnahmegehäuses 20 sind durch den Längsabschnitt 11 der Motortrageinheit 10 voneinander getrennt angeordnet. In anderen Worten sind die Aufnahme 21 und die Aufnahme 22 bezogen auf den ersten Längsabschnitt 11 der Motortrageinheit 10 gegenüberliegend zueinander angeordnet. Die erste Aufnahme 21 des Aufnahmegehäuses 20 ist der ersten Außenseite 17 der Motortrageinheit 10, insbesondere im ersten Längsabschnitt 11 der Motortrageinheit 10, zugewandt angeordnet. Die zweite Aufnahme 22 des Aufnahmegehäuses 20 ist der zweiten Außenseite 18 der Motortrageinheit 10, zugewandt angeordnet. Somit verläuft die Motortrageinheit 10 zwischen den beiden Aufnahmen 21, 22 des Aufnahmegehäuses 20, insbesondere zwischen den beiden Akkupacks 7, 7'.

Das Aufnahmegehäuse 20, umfassend die erste Aufnahme 21 und die zweite Aufnahme 22, ist vorzugsweise einteilig ausgebildet. Das Aufnahmegehäuse 20 weist eine Öffnung 23 auf, die sich in Richtung der Längsmittelachse 26 der Motortrageinheit 10 erstreckt. Somit kann die Motortrageinheit 10 in der Öffnung 23 des Aufnahmegehäuses 20 angeordnet werden. Die Öffnung 23 ist nach unten hin, also zur Unterseite 45 des Arbeitsgerätes 1 hin, geöffnet. Die erste Aufnahme 21 des Aufnahmegehäuses 20 und die zweite Aufnahme 22 des Aufnahmegehäuses 20 sind durch die Öffnung 23 voneinander getrennt. Durch diese Anordnung der Motortrageinheit 10 und des Aufnahmegehäuse 20 ist die Motortrageinheit 10 zumindest partiell zentral im Gehäuse 2 des Arbeitsgerätes 1 angeordnet, wodurch diese das Gehäuse 2 über die ersten Befestigungseinheiten 65 gleichmäßig stützt und versteift. Durch die Anordnung der beiden Akkupacks 7, 7' beziehungsweise der beiden Aufnahmen 21, 22 des Aufnahmegehäuses 20 an je einer Außenseite 17, 18 der Motortrageinheit 10 kann zugleich eine kompakte Bauweise des Arbeitsgerätes 1 sichergestellt werden.

Wie in den Figuren 5 bis 7 gezeigt, ist das Aufnahmegehäuse 20 lediglich an dem Gehäuse 2 befestigt. Eine unmittelbare Befestigung zwischen dem Aufnahmegehäuse 20 und der Motortrageinheit 10 besteht hingegen nicht. Das Gehäuse 2 weist eine gewisse Nachgiebigkeit auf, die eine Relativbewegung des Aufnahmegehäuses 20 gegenüber der Motortrageinheit 10 zulässt. Darüber hinaus sind das Aufnahmegehäuse 20 und die Motortrageinheit 10 zueinander beabstandet angeordnet. Dadurch kann sichergestellt werden, dass bei einer gewünschten Relativbewegung zwischen dem Aufnahmegehäuse 20 und der Motortrageinheit 10 ein gegenseitiges Verklemmen der Bauteile vermieden werden kann. Besonders bevorzugt ist die Motortrageinheit 10 über ihren gesamten ersten Längsabschnitt 11 gegenüber dem Aufnahmegehäuse 20 kontaktfrei. Zur Befestigung des Aufnahmegehäuses 20 an dem Gehäuse 2 sind dritte Befestigungseinheiten 82 vorgesehen. Die Befestigungseinheiten 82 sind vorzugsweise aus Schraubverbindungen ausgebildet.

Die Motortrageinheit 10 ist bevorzugt ein Gussteil. Die Motortrageinheit 10 ist insbesondere aus einem Werkstoff gebildet, der ein höheres Elastizitätsmodul aufweist, als der Werkstoff des Gehäuses 2. Die Motortrageinheit 10 ist vorzugsweise aus einer Metalllegierung, insbesondere aus einer Magnesiumlegierung, gebildet. Das Gehäuse 2 ist bevorzugt aus einem Kunststoff gebildet. Das Gehäuse 2 ist dabei so ausgebildet, dass dieses eine ausreichende Festigkeit zum Schutz der innerhalb des Gehäuses 2 angeordneten Bauelemente aufweist. Zugleich weist das Gehäuse 2 eine Elastizität auf, die entsprechende Trägheitskräfte der Akkupacks 7, 7' bei einem stoßartigen Aufprall des Arbeitsgerätes 1 auf dem Boden oder gegenüber anderen Gegenständen abdämpft, so dass die Kräfte, die von dem Aufnahmegehäuse 20 über das Gehäuse 2 auf die Motortrageinheit 20 übertragen werden, entsprechend gedämpft sind.

Das Aufnahmegehäuse 20, die Motortrageinheit 10 und das Gehäuse 2 sind derart zueinander angeordnet und ausgebildet, dass im Falle eines Aufpralls des Arbeitsgerätes 1 auf einen Gegenstand oder Vergleichbares ein Kraftfluss, erzeugt durch das Trägheitsmoment der in dem Aufnahmegehäuse 20 angeordneten Akkupacks 7, 7', von dem Aufnahmegehäuse 20 unmittelbar auf die Motortrageinheit 10 nicht möglich ist. Der Kraftfluss verläuft ausgehend von den Akkupacks 7, 7' über das Aufnahmegehäuse 20 in das Gehäuse 2 und von dem Gehäuse 2 in die Motortrageinheit 10. Durch elastische und/oder plastische Verformungen des Gehäuses 2 wird die Energie in dem Gehäuse 2 durch Verformung umgewandelt. Die auf die Motortrageinheit 10 wirkende, resultierende Stoßbelastung ist somit deutlich reduziert, wodurch Beschädigungen an der Motortrageinheit 10 vermieden werden können.

Wie in Fig. 10 gezeigt, umfasst die Motortrageinheit 10 einen Grundkörper 90, der sich von dem ersten Längsabschnitt 11 über den Mittelabschnitt 13 bis einschließlich zum zweiten Längsabschnitt 12 erstreckt. Dieser Grundkörper 90 ist durch die Z-förmige Kontur des Mittelabschnittes 13 einfach gekrümmt ausgebildet. An dem Grundkörper 90 der Motortrageinheit 10 ist die Motoraufnahme 14 angeordnet. Der erste Längsabschnitt 11 der Motortrageinheit 10 liegt zentral im Gehäuseinnenraum (Fig. 5 bis 7). Der hintere Handgriff 6 weist eine Längsmittelachse 96 auf, wobei in Draufsicht auf das Arbeitsgerät, also in Blickrichtung auf die Querebene 62, die Längsmittelachse 96 des hinteren Handgriffes 6 in dem ersten Längsabschnitt 11 der Motortrageinheit 10 liegt. Dadurch unterteilt der erste Längsabschnitt 11 der Motortrageinheit 10 den Gehäuseinnenraum im Bereich des Längsabschnittes 11 in zwei gleich große kleinere Bauräume, in welchen jeweils eine Aufnahme 21, 22 des Aufnahmegehäuses 20 angeordnet ist. Der zweite Längsabschnitt 12 der Motortrageinheit 10 liegt außerhalb der Längsmittelachse 96 des hinteren Handgriffes 6. Der Abstand des zweiten Längsabschnittes 12 der Motortrageinheit 10 zur ersten Längsaußenseite 46 des Arbeitsgerätes 1 ist geringer als der Abstand des ersten Längsabschnittes 11 der Motortrageinheit 10 zur ersten Längsaußenseite 46 des Arbeitsgerätes 1. Dadurch ist der Bauraum im Bereich des zweiten Längsabschnittes 12 der Motortrageinheit 10 zur zweiten Längsaußenseite 47 hin deutlich größer als die zwei kleineren Bauräume im Bereich des ersten Längsabschnittes 11 der Motortrageinheit 10.

Wie in den Figuren 8 und 9 gezeigt, umfasst die Motortrageinheit 10 mindestens eine Versteifungsrippe 95, vorliegend mehrere Versteifungsrippen 95. Die Versteifungsrippen 95 verlaufen im Wesentlichen in Richtung der Längsmittelachse 26 der Motortrageinheit 10. Die Versteifungsrippen 95 sind sowohl an der der ersten Außenseite 17 als auch an der zweiten Außenseite 18 ausgebildet. Die Versteifungsrippen 95 verlaufen mindestens von dem ersten Längsabschnitt 11 bis zum Mittelabschnitt 13. Vorliegend verlaufen die Versteifungsrippen 95 auf der ersten Außenseite 17 der Motortrageinheit 10 von dem hinteren Ende 27 der Motortrageinheit 10 über den ersten Längsabschnitt 1 der Motortrageinheit 10 bis hin zum Mittelabschnitt 13 der Motortrageinheit 10. Auf der zweiten Außenseite 18 der Motortrageinheit 10 verlaufen die Versteifungsrippen 95 von dem hinteren Ende 27 der Motortrageinheit 10 über den ersten Längsabschnitt 11 der Motortrageinheit 10, über den Mittelabschnitt 13 der Motortrageinheit 10 bis zum zweiten Längsabschnitt 12 der Motortrageinheit 10. Die Versteifungsrippen 95 sind in Richtung der Längsmittelachse 26 der Motortrageinheit 10 vorzugsweise unterbrechungsfrei.

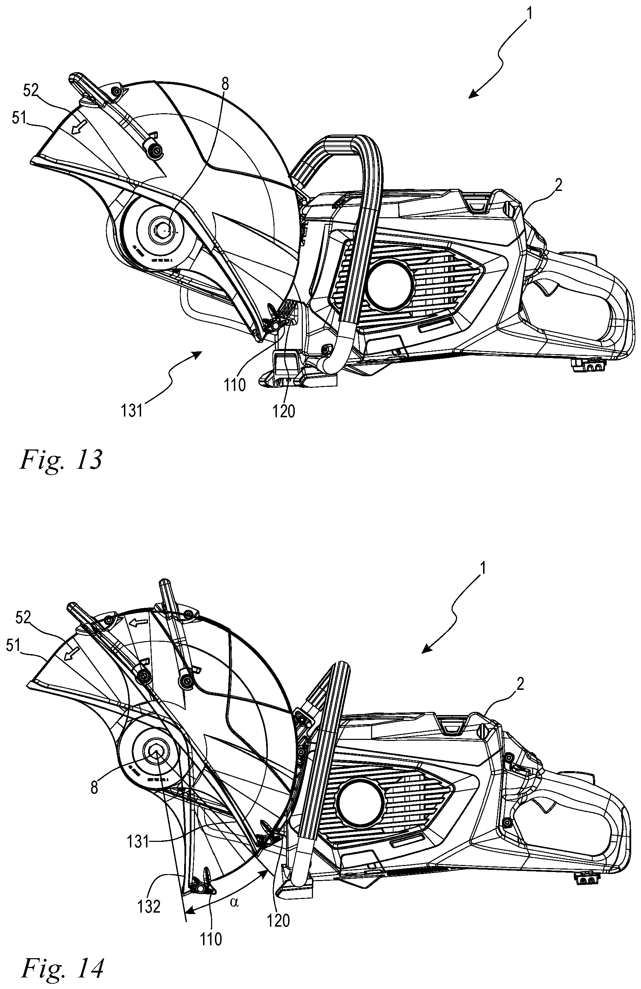

Wie in den Figuren 12 und 13 gezeigt, umfasst das Arbeitsgerät 1 einen Anschlag 110. Der Anschlag 110 ist an der Schutzhaube 51 des Arbeitsgerätes 1 angeordnet. Ferner umfasst das Arbeitsgerät 1 einen Gegenanschlag 120. Der Gegenanschlag 120 ist an der Motortrageinheit 10 ausgebildet. Der Anschlag 110 und der Gegenanschlag 120 sind zur mechanischen Wechselwirkung ausgebildet, um eine Schwenkbewegung der Schutzhaube 51 in eine Endstellung 131 zu begrenzen. Das Werkzeug 5 ist um eine Drehachse 8 drehbar gelagert. Die Schutzhaube 51 ist schwenkbar um eine Drehachse gelagert. Die Drehachse der Schutzhaube 51 entspricht der Drehachse 8 des Werkzeuges 5. Die Schutzhaube 51 ist von einer Offenstellung 132, wie diese in Fig. 12 gezeigt ist, in die Endstellung 131 schwenkbar. In Fig. 13 ist die Schutzhaube 51 des Arbeitsgerätes 1 in der Endstellung 131 gezeigt. In dieser Endstellung 131 kontaktieren sich der Anschlag 110 der Schutzhaube 51 sowie der Gegenanschlag 120 der Motortrageinheit 10.

Wie in Fig. 14 gezeigt, ist die Schutzhaube 51 um einen maximalen Schwenkwinkel α schwenkbar. Der maximale Schwenkwinkel α erstreckt sich bezogen auf die Drehachse 8 von der Offenstellung 132 in die Endstellung 131. Ein Schwenken der Schutzhaube 51 in Drehrichtung 52 des Werkzeuges 5 über die Endstellung 131 hinaus ist nicht möglich. Ein Schwenken der Schutzhaube 51 entgegen der Drehrichtung 52 des Werkzeuges 5 über die Offenstellung 132 hinaus ist nicht möglich. Der maximale Schwenkwinkel α ist bevorzugt kleiner gleich 90°, insbesondere kleiner 60°. Der maximale Schwenkwinkel α der Schutzhaube 51 von der Offenstellung 132 in die Endstellung 131 oder von der Endstellung 131 in die Offenstellung 132 beträgt vorzugsweise mindestens 30°.

Wie in Fig. 12 gezeigt, erstreckt sich die Schutzhaube 51 von einem ersten Ende 112 um die Drehachse 8 bis zu einem zweiten Ende 113. Das zweite Ende 113 ist das Ende der Schutzhaube 51, das sowohl in der Endstellung 131 als auch in der Offenstellung 132 der Schutzhaube 51 näher am Gehäuse 2, vorzugsweise näher an der Motortrageinheit 10 angeordnet ist. Darüber hinaus liegt das zweite Ende 113 unterhalb des ersten Endes 112 der Schutzhaube 51. Der Anschlag 110 ist vorzugsweise benachbart zum Ende 113 der Schutzhaube 51 angeordnet. Die Schutzhaube 51 weist eine erste Längsseite 115, eine zweite Längsseite 116 sowie eine Umfangsseite 114 auf. Die erste Längsseite 115 und die zweite Längsseite 116 sind über die Umfangsseite 114 miteinander verbunden. Die Haupterstreckungsrichtung der ersten Längsseite 115 und der zweiten Längsseite 116 der Schutzhaube 51 verläuft in etwa parallel zur Werkzeugebene 50. Der Anschlag 110 ist auf der Umfangsseite 114 der Schutzhaube 51 angeordnet.

Der Anschlag 110 ist vorzugsweise integral mit der Schutzhaube 51 ausgebildet. Die Schutzhaube 51 ist vorzugsweise ein Gussbauteil. Die Schutzhaube 51 und der Anschlag 110 sind vorzugsweise aus einem einzigen Gussbauteil gebildet. Die Schutzhaube 51 sowie der Anschlag 110 sind insbesondere aus einer Metalllegierung gebildet. Somit weist die Schutzhaube 51 gemeinsam mit dem Anschlag 110 eine hohe Bauteilfestigkeit auf. In einer alternativen Ausführung kann es auch vorgesehen sein, dass die Schutzhaube 51 aus Blechelementen geschweißt ist.

Wie insbesondere in den Figuren 9 bis 11 gezeigt, ist der Gegenanschlag 120 an dem vorderen Ende 28 der Motortrageinheit 10 angeordnet. Besonders bevorzugt ist der Gegenanschlag 120 integral mit der Motortrageinheit 10 ausgebildet. Wie bereits oben ausgeführt, ist die Motortrageinheit 10 in der bevorzugten Ausführungsform als Gussbauteil ausgebildet. Demnach bilden die Motortrageinheit 10 sowie der Gegenanschlag 120 ein einziges Gussbauteil. Die Motortrageinheit 10 sowie der Gegenanschlag 120 bestehen vorzugsweise aus einer Metalllegierung, insbesondere aus einer Magnesiumlegierung.

Wie in den Figuren 12 bis 16 gezeigt, umfasst das Arbeitsgerät 1 eine erste Anschlagsfläche 111 und eine zweite Anschlagsfläche 122. Die erste Anschlagsfläche 111 ist an dem Anschlag 110 der Schutzhaube 51 ausgebildet. Die zweite Anschlagsfläche 122 ist an dem Gegenanschlag 120 der Motortrageinheit 10 ausgebildet. In der Endstellung 131 der Schutzhaube 51 liegt der Anschlag 110 mit der ersten Anschlagsfläche 111 an der zweiten Anschlagsfläche 122 des Gegenanschlages 122 an. Im Endanschlag 131 der Schutzhaube 51 kontaktieren sich die erste Anschlagsfläche 111 und die zweite Anschlagsfläche 122 in einer Kontaktfläche 130. Die erste Anschlagsfläche 111 und die zweite Anschlagsfläche 122 sind folglich derart ausgebildet, dass sich diese flächig in der Endstellung 131 der Schutzhaube 51 kontaktieren.

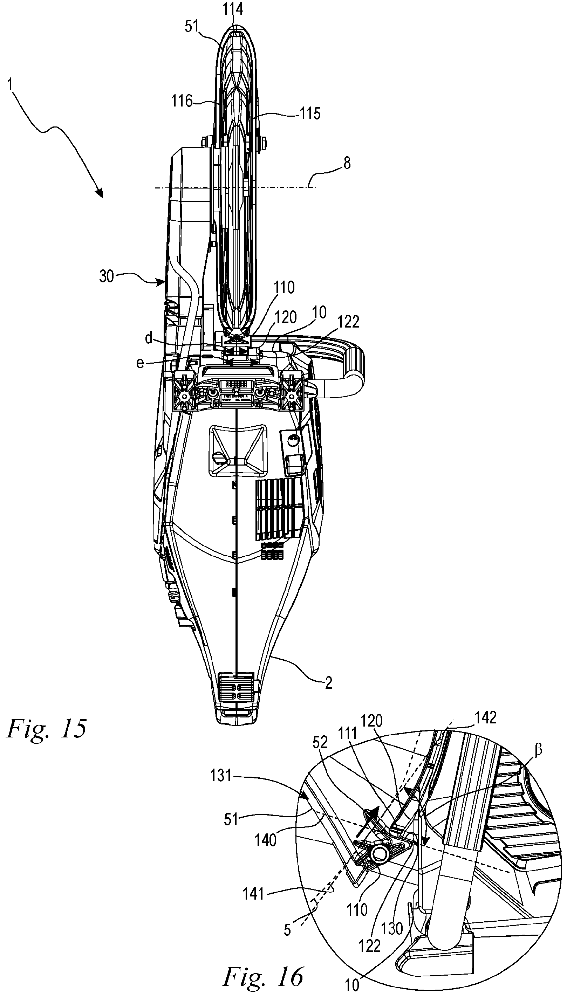

In Fig. 16 sind der Anschlag 110 und der Gegenanschlag 120 im gegenseitigen Kontakt vergrößert dargestellt. Die Kontaktfläche 130 spannt eine Kontaktebene 140 auf. Das Werkzeug 5 ist in Fig. 16 gestrichelt dargestellt und weist einen Werkzeugumfang 141 auf. Dass ein derartiges Werkzeug 5, beispielsweise als Trennscheibe ausgebildet, keinen ideal kreisrunden Werkzeugumfang aufweist, soll dieser vielmehr einer bezogen auf die Drehachse 8 des Werkzeuges 5 radial äußersten Kontur eines durch das Werkzeug 5 vorgegebenen Drehkörpers verstanden werden. Die Kontaktebene 140 schneidet das Werkzeug 5 an dem Werkzeugumfang 141 des Werkzeuges 5 in einer nicht näher dargestellten Kontaktlinie. An dieser Kontaktlinie weist das Werkzeug 5 eine Tangentialebene 142 auf. In anderen Worten weist das Werkzeug 5 eine Tangentialebene 142 auf, die das Werkzeug 5 an dem Werkzeugumfang 141 in der genannten Kontaktlinie tangiert. Kontaktebene 140 und Tangentialebene 142 schneiden sich in der Kontaktlinie und schließen dabei einen Winkel β ein. Der Winkel β ist bezogen auf die Kontaktlinie in Drehrichtung 52 des Werkzeuges 5 geöffnet. Der Winkel β ist vorzugsweise kleiner als 90°, insbesondere kleiner als 80°. Der Winkel β ist insbesondere größer als 60°, insbesondere größer als 70°. Der Winkel β ist derart gewählt, dass sich der Anschlag und der Gegenanschlag ineinander verhaken. Die Schutzhaube 51 wird durch die oben beschriebene winklige Ausrichtung der Kontaktzone bei Kontakt von Anschlag 110 und Endanschlag 120 an die Motortrageinheit 10 herangezogen. Dennoch ist der Winkel β nicht derart spitz ausgebildet, dass die Anzugskräfte von Anschlag 110 und Gegenanschlag 120 nicht derart hoch sind, dass der Anschlag 110 aus der Schutzhaube 51 oder der Gegenanschlag 120 aus der Motortrageinheit 10 ausbricht.

Wie insbesondere in Fig. 9 gezeigt, weist der Gegenanschlag 120 eine Lastabtragstruktur 121 auf. Die Lastabtragstruktur 121 erstreckt sich ausgehend von der zweiten Anschlagsfläche 122 tangential zur Drehrichtung 52 des Werkzeuges in den Grundkörper 90 der Motortrageinheit (Fig. 14). Der Gegenanschlag 120 weist mehrere Rippen 123 auf, die Teile der Lastabtragstruktur 121 sind. In der bevorzugten Ausführung des Arbeitsgerätes 1 umfasst der Gegenanschlag 120 zwei äußere Rippen 123, die den Gegenanschlag 120 in Richtung der Drehachse 8 des Werkzeuges 5, also in der Breite des Gegenanschlages, begrenzen. Zwischen den beiden äußeren Rippen 123 ist mindestens eine weitere Rippe, vorzugsweise zwei Rippen oder mehr, angeordnet. Dadurch wird zum einen ausreichend Tragstruktur bereitgestellt, die eine hohe Kraftübertragung von dem Anschlag 110 der Schutzhaube 51 über den Gegenanschlag 120 auf den Grundkörper 90 der Motortrageinheit 10 ermöglicht. Zum anderen begünstigt die rippenförmige Lastabtragstruktur die Herstellbarkeit des Gegenanschlages 120 als Gussbauteil.

Wie in Fig. 16 gezeigt, ist die erste Anschlagsfläche 111 an dem Anschlag 110 der Schutzhaube 51 in Drehrichtung 52 des Werkzeuges 5 ausgerichtet. Die zweite Anschlagsfläche 122 an dem Gegenanschlag 120 der Motortrageinheit 10 ist entgegen der Drehrichtung 52 des Werkzeuges 5 ausgerichtet.

Wie in Fig. 15 gezeigt, weist die erste Anschlagsfläche 111 des Anschlages 110 eine in Richtung der Drehachse 8 des Werkzeuges 5 gemessene Breite d auf. Die zweite Anschlagsfläche 122 des Gegenanschlages 120 weist eine in Richtung der Drehachse 8 des Werkzeuges 5 gemessene Breite e auf. Die Breite e der zweiten Anschlagsfläche 122 des Gegenanschlages 120 ist größer als die Breite d der ersten Anschlagsfläche 111 des Anschlages 110. Die Breite e der zweiten Anschlagsfläche 122 des Gegenanschlages 120 entspricht mindestens dem 1,2-fachen, vorzugsweise mindestens dem 1,3-fachen, insbesondere mindestens dem 1,4-fachen der Breite d der ersten Anschlagsfläche 111 des Anschlages 110 der Schutzhaube 51. Besonders bevorzugt entspricht die Breite e der zweiten Anschlagsfläche 122 des Gegenanschlages 120 in etwa dem 1,5-fachen der Breite d der ersten Anschlagsfläche 111 des Anschlages 110 der Schutzhaube 51. Die Breite d der ersten Anschlagsfläche 111 des Anschlages 110 ist geringer als die Breite des Grundkörpers der Schutzhaube 51, die durch den in Richtung der Drehachse 8 des Werkzeuges 5 gemessenen Abstand zwischen der ersten Längsseite 115 und der zweiten Längsseite 116 der Schutzhaube 51 vorgegeben ist.

Wie in Fig. 15 gezeigt, sind die erste Anschlagsfläche 111 des Anschlages 110 und die zweite Anschlagsfläche 122 des Gegenanschlages 120 derart zueinander angeordnet, dass deren dem Ausleger 30 zugewandtes Ende in etwa bezogen auf eine Richtung der Drehachse 8 des Werkzeuges 5 in etwa auf gleicher Position angeordnet sind. Da die zweite Anschlagsfläche 122 breiter als die erste Anschlagsfläche 111 ist, weist das dem Ausleger 30 abgewandte Ende der zweiten Anschlagsfläche einen deutlich größeren Abstand zum Ausleger auf als das dem Ausleger 30 abgewandte Ende der ersten Anschlagsfläche. Somit wird sichergestellt, dass auch bei Verformungen der Schutzhaube, beispielsweise durch Schwingungen der Schutzhaube, der Anschlag 110 mit seiner gesamten ersten Anschlagsfläche 111 auf der zweiten Anschlagsfläche 122 des Gegenanschlages 120 zum Liegen kommt. Verformt sich die Schutzhaube 51, dann in der Regel von dem Ausleger 30 weg, da dieser einen einseitigen Anschlag für die Schutzhaube 51 bildet.

In einer weiteren, alternativen Ausgestaltung des Arbeitsgerätes 1 ist es vorgesehen, analog der gezeigten Ausführung auch Anschläge und Gegenkörper vorzusehen, die einen Betrieb des Arbeitsgerätes 1 mit zwei Drehrichtungen des Werkzeuges 5 ermöglichen.

## Patentansprüche

1. Arbeitsgerät
umfassend,
- ein Gehäuse (2),
- eine vom Gehäuse (2) separat ausgebildete Motortrageinheit (10), wobei das Gehäuse (2) an der Motortrageinheit (10) fixiert ist,
- einen im Gehäuse (2) angeordneten Antriebsmotor (3),
- wobei der Antriebsmotor (3) als Elektromotor zum Antrieb eines Werkzeuges (5) ausgebildet ist und an der Motortragtrageinheit (10) befestigt ist,
- ein von der Motortrageinheit (10) separat ausgebildetes Aufnahmegehäuse (20) zur Aufnahme mindestens eines Akkupacks (7, 7') zur Versorgung des Antriebsmotors (3) mit elektrischer Energie,
**dadurch gekennzeichnet, dass** das Aufnahmegehäuse (20) an dem Gehäuse (2) fixiert ist, und dass das Aufnahmegehäuse (20) und die Motortrageinheit (10) derart ausgebildet und zueinander angeordnet sind, dass das Aufnahmegehäuse (20) relativ zur Motortrageinheit (10) bewegbar ist, um bei einer Stoßbelastung auf das Arbeitsgerät (1) eine unmittelbare Übertragung von von dem Aufnahmegehäuse (20) ausgehenden Trägheitskräften auf die Motortrageinheit (10) zu reduzieren, insbesondere zu vermeiden.

2. Arbeitsgerät nach Anspruch 1,
**dadurch gekennzeichnet, dass** die Motortrageinheit (10) und das Aufnahmegehäuse (20) lediglich über das Gehäuse (2) miteinander verbunden sind.

3. Arbeitsgerät nach Anspruch 1 oder 2,
**dadurch gekennzeichnet, dass** die Motortrageinheit (10) und das Aufnahmegehäuse (20) beabstandet zueinander angeordnet sind.

4. Arbeitsgerät nach einem der Ansprüche 1 bis 3,
**dadurch gekennzeichnet, dass** jede Verbindung zwischen dem Gehäuse (2) und der Motortrageinheit (10) und / oder jede Verbindung zwischen dem Gehäuse (2) und dem Aufnahmegehäuse (20) frei von einem separat ausgebildeten Antivibrationselement ist.

5. Arbeitsgerät nach einem der Ansprüche 1 bis 4,
**dadurch gekennzeichnet, dass** das Aufnahmegehäuse (20) mindestens zwei Aufnahmen (21, 22) zur Aufnahme von zwei Akkupacks (7, 7') aufweist, wobei zwischen den zwei Aufnahmen (21, 22) eine Öffnung (23) vorgesehen ist, durch die die Motortrageinheit (10) ragt.

6. Arbeitsgerät nach einem der Ansprüche 1 bis 5,
**dadurch gekennzeichnet, dass** die Bauteilsteifigkeit der Motortrageinheit (10) größer ist als die des Gehäuses (2).

7. Arbeitsgerät nach einem der Ansprüche 1 bis 6,
**dadurch gekennzeichnet, dass** das Arbeitsgerät (1) einen hinteren Handgriff (53) und einen vorderen Handgriff (54) aufweist, wobei dem hinteren Handgriff (53) ein Bedienelement (6) zur Steuerung des Antriebsmotors (3) zugeordnet ist, und dass die Motortrageinheit ein hinteres Ende (27) und ein vorderes Ende (28) aufweist, und dass das hintere Ende (27) dem Werkzeug (5) abgewandt und das vordere Ende (28) dem Werkzeug (5) zugewandt ist, wobei im hinteren Bereich der Motortrageinheit (10) der hintere Handgriff (53) und im vorderen Bereich der Motortrageinheit (10) der vordere Handgriff (54) befestigt ist.

8. Arbeitsgerät
umfassend,
ein Gehäuse (2),
eine vom Gehäuse (2) separat ausgebildete Motortrageinheit (10), die mit dem Gehäuse (2) verbunden ist,
einen im Gehäuse (2) angeordneten Antriebsmotor (3), wobei der Antriebsmotor (3) als Elektromotor ausgebildet ist und an der Motortrageinheit (10) befestigt ist,
ein Aufnahmegehäuse (20) mit mindestens einer ersten Aufnahme (21) und einer zweiten Aufnahme (22) zur Aufnahme jeweils eines Akkupacks (7, 7'), **dadurch gekennzeichnet, dass** die Motortrageinheit (10) zumindest teilweise zwischen der ersten Aufnahme (21) und der zweiten Aufnahme (22) angeordnet ist.

9. Arbeitsgerät nach Anspruch 8,
**dadurch gekennzeichnet, dass** die Motortrageinheit (10) einen Mittelabschnitt (13) aufweist, wobei der Mittelabschnitt eine erste Krümmung (91) und eine zweite Krümmung (92) aufweist, wobei die erste Krümmung (91) und die zweite Krümmung (92) gegensinnig zueinander verlaufen.

10. Arbeitsgerät nach Anspruch 9,
**dadurch gekennzeichnet, dass** die erste Krümmung (91) eine erste Krümmungsachse (93) aufweist, und dass die zweite Krümmung (92) eine zweite Krümmungsachse (94) aufweist, wobei die erste Krümmungsachse (93) der ersten Krümmung (91) und die zweite Krümmungsachse (94) der zweiten Krümmung (92) parallel zueinander ausgerichtet sind.

11. Arbeitsgerät nach Anspruch 9 oder 10,
**dadurch gekennzeichnet, dass** die Motortrageinheit (10) einen ersten Längsabschnitt (11) und einen zweiten Längsabschnitt (12) aufweist, die insbesondere parallel zueinander ausgerichtet sind, wobei der erste Längsabschnitt (11) und der zweite Längsabschnitt (12) über den Mittelabschnitt (11) miteinander verbunden sind.

12. Arbeitsgerät nach Anspruch 11,
**dadurch gekennzeichnet, dass** der erste Längsabschnitt (11) der Motortrageinheit (10) zwischen der ersten Aufnahme (21) des Akkugehäuses (20) und der zweiten Aufnahme (22) des Akkugehäuses (20) angeordnet ist, wobei die erste Aufnahme (21) und die zweite Aufnahme (22) insbesondere als Aufnahmeschächte ausgebildet sind.

13. Arbeitsgerät nach Anspruch 11 oder 12,
**dadurch gekennzeichnet, dass** an dem zweiten Längsabschnitt (12) der Motortrageinheit (10) der Antriebsmotor (3) befestigt ist.

14. Arbeitsgerät nach einem der Ansprüche 8 bis 13,
**dadurch gekennzeichnet, dass** die Motortrageinheit (10) eine Motortragplatte ist, die insbesondere aus einer Metalllegierung, insbesondere aus einer Magnesiumlegierung ausgebildet ist, wobei die Motortragplatte insbesondere ein Gussbauteil mit einer Hauptentformungsrichtung (31) ist, wobei die Hauptentformungsrichtung (31) der Richtung einer Drehachse (4) des Antriebsmotors (3) entspricht.

15. Arbeitsgerät nach einem der Ansprüche 8 bis 14,
**dadurch gekennzeichnet, dass** das Arbeitsgerät (1) einen hinteren Handgriff (53) und einen vorderen Handgriff (54) aufweist, wobei dem hinteren Handgriff (53) ein Betätigungselement (6) zur Steuerung des Antriebsmotors (3) zugeordnet ist, und dass die Motortrageinheit ein hinteres Ende (27) und ein vorderes Ende (28) aufweist, und dass das hintere Ende (27) dem Werkzeug (5) abgewandt und das vordere Ende (28) dem Werkzeug (5) zugewandt ist, wobei im hinteren Bereich der Motortrageinheit (10) der hintere Handgriff (53) und im vorderen Bereich der Motortrageinheit (10) der vordere Handgriff (54) befestigt ist.
